# EUROPEAN PATENT APPLICATION

(11) **EP 3 739 366 A1**
(43) Date of publication of application: **18.11.2020**
(21) Application number: 20174214.5
(22) Date of filing: 12.05.2020
(51) Int. Cl.: G01W 1/00

(54) **VEHICLE DISTURBANCE MEASUREMENT AND ISOLATION SYSTEM**

(30) Priority: 13.05.2019 US 201916410883
(71) Applicant: Honeywell International Inc., Morris Plains, NJ 07950 (US)
(72) Inventor: PRITCHARD, Anthony, Morris Plains, NJ New Jersey 07950 (US); WEED, Douglas Mark, Morris Plains, NJ New Jersey 07950 (US); AHLBRECHT, Mark A., Morris Plains, NJ New Jersey 07950 (US)
(74) Representative: Houghton, Mark Phillip

(57) **Abstract**

A vehicle disturbance and isolation detection system is provided. The system includes at least one measurement sensor that is configured to generate measurement signals, at least one filter that is used to sort disturbance causes in the measured signals by frequencies, at least one controller that is used to compare the sorted signal to at least one threshold to determine if an event has occurred, a memory to store at least operating instructions for the at least one controller, a controller that is in communication with the memory and a communication system that is in communication with the at least one controller. The communication system is configured to transmit determined events to a remote location.

## Description

### BACKGROUND

Turbulence is a significant issue for air transport operators. Turbulence can cause issues to passengers, crew, and the structure of the vehicle itself. To reduce the economic and personnel effects, the ability to forecast turbulence is desired. Current forecast turbulence methods rely on collecting position and turbulence magnitude data from aircraft that are experiencing turbulence and communicating that to a forecast center. These current methods are mainly a manual process, for communication, detection, and assessment of magnitude of the turbulence. The forecast centers then broadcast the turbulence forecast to subscriber aircrafts.

### SUMMARY

The following summary is made by way of example and not by way of limitation. It is merely provided to aid the reader in understanding some of the aspects of the subject matter described. Embodiments provide methods and systems of measuring and isolating vehicle movement caused by disturbances using frequencies associated with the cause of the disturbance. This provides an effective and efficient manner to detect and assess the magnitude of turbulence and other disturbances affecting the vehicle.

In one embodiment, a vehicle disturbance and isolation detection system is provided. The system includes at least one measurement sensor that is configured to generate measurement signals, at least one filter that is used to sort disturbance causes in the measured signals by frequencies, at least one controller that is used to compare the sorted signal to at least one threshold to determine if an event has occurred, a memory to store at least operating instructions for the at least one controller, a controller that is in communication with the memory and a communication system that is in communication with the at least one controller. The communication system is configured to transmit determined events to a remote location.

In another example embodiment, a method of operating a vehicle disturbance measurement and isolation system is provided. The method includes generating measurement signals with one or more measurement sensors; bandpass filtering the measurement signals to sort out sources of disturbances by frequencies; comparing sorted signals with at least one threshold to determine if at least one event has occurred relating to an associated source of the disturbance; and communicating the at least one event to a remote location.

In yet another embodiment, another method operating a vehicle disturbance measurement and isolation system is provided. The method includes generating vehicle acceleration signals with at least one acceleration sensor; filtering the acceleration signals with at least one bandpass filter to sort out signal sources based on turbulence frequencies; comparing the sorted out signals associated with the turbulence frequencies with at least one threshold; determining a turbulence event has occurred when the sorted out signals associated with the turbulence frequencies reaches the at least one threshold; and upon determining a turbulence event has occurred doing at least one of communicating the turbulence event to a remote location and storing the turbulence event in a memory.

### BRIEF DESCRIPTION OF THE DRAWINGS

Embodiments can be more easily understood and further advantages and uses thereof will be more readily apparent, when considered in view of the detailed description and the following figures in which:
Figure 1 is a block drawing of a vehicle including a disturbance and isolation detection system according to one exemplary embodiment;
Figure 2 is a frequency response graph according to one exemplary embodiment;
Figure 3 is a maneuver rejection graph illustrating the frequency response of an aircraft maneuver according to one exemplary embodiment;
Figure 4 is a turbulence event graph illustrating the frequency response of an aircraft to turbulence according to one exemplary embodiment;
Figure 5 is an event detection flow diagram of one embodiment; and
Figure 6 is a processing flow diagram of one embodiment.

In accordance with common practice, the various described features are not drawn to scale but are drawn to emphasize specific features relevant to the subject matter described. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the embodiments, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

In embodiments, a discriminator that is tailored to detect different type of events that cause movement of a vehicle such as, but not limit to, operator maneuvers such as flap deployment, turbulence, chop, vibrations, etc. is provided. In particular, embodiments provide a method of measuring and isolating vehicle movement caused by disturbances using frequencies associated with the cause of the disturbance. This allows for isolating disturbances caused by turbulence from other causes of vehicle movement. Further in an embodiment, once the movement disturbances are sorted by frequencies, an automated turbulence reporting system may be invoked transmitting the turbulence detected levels.

One measure of the turbulence that a vehicle may undergo is the vertical acceleration. Recording vertical acceleration allows for the automated reporting of turbulence data. Embodiments identify and remove pilot commanded maneuvers from a vertical acceleration (turbulence) before it is reported. The ability to isolate turbulence noise provides the capability to identify and measure other sources of vertical acceleration disturbances in other frequency bands which may provide useful information to the flight record log. Although, vertical accelerations are discussed, systems and methods may be applied to other movements and directions.

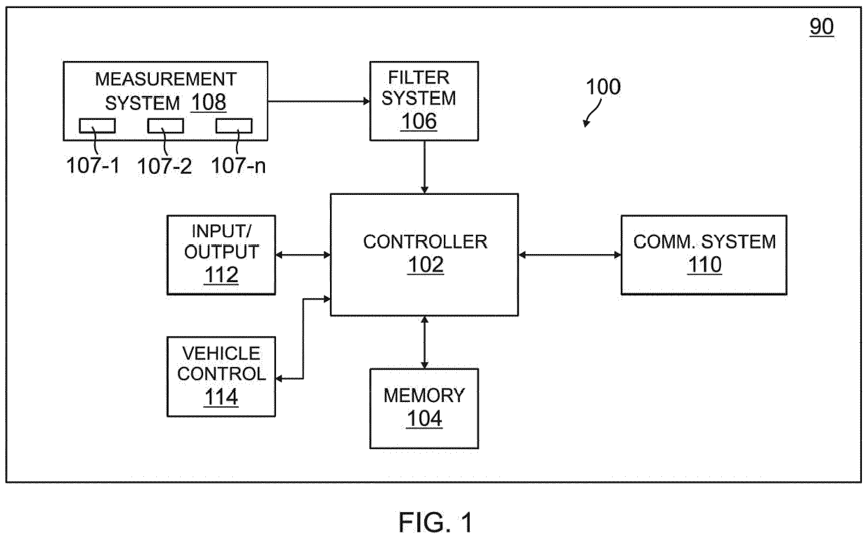

Referring to Figure 1, a block diagram of a measurement and isolation system 100 of a vehicle 90 of an embodiment is illustrated. The measurement and isolation system 100 includes a measurement system 108. The measurement system 108 includes one or more measurement sensors 107-1 through 107-n that measures movement of the vehicle 90. The measurement sensors may be generally referenced as 107. The measurement system 108 may include, but is not limited to, one or more of an accelerometer, an inertial measurement unit (IMU), inertial reference system (IRS), an attitude and heading reference system (AHRS), etc. that generates measurement information regarding movement of the vehicle 90. In one example the measurement system 108 measures acceleration.

The measurement and isolation system 100 further includes a filter system 106 that is designed to filter the measurement information generated by the measurement system 108 to identify movement based on turbulence such as atmospheric turbulence in an aircraft application. In order to isolate and measure movement, raw output of the measurement information is run through the filter system 106. In a vertical acceleration example, vertical acceleration noise (measurement information) due to various disturbances (a main source of interest being atmospheric turbulence), is filtered. For example, regarding turbulence isolation, the vertical acceleration output is low-pass filtered with the filter system 106 at an appropriate cutoff frequency to remove the spectral content of the higher frequency turbulence mechanisms such as chop and vibe from the vertical acceleration noise. This output is also high-passed filtered with an appropriate cutoff frequency to remove the low frequency acceleration that occurs with maneuvers. The cutoff frequency is particular to the aircraft application. The resulting turbulence measurement may be used to log the real time turbulence level and to issue turbulence warnings to the cockpit. In one embodiment, a Butterworth bandpass filter is used to filter vertical acceleration.

A controller 102 is in communication with the filter system 106. The controller 102 processes the data from the filter system 106 in determining movement caused by turbulence based on instructions stored in memory 104. In general, the controller 102 may include any one or more of a processor, microprocessor, a digital signal processor (DSP), an application specific integrated circuit (ASIC), a field program gate array (FPGA), or equivalent discrete or integrated logic circuitry. In some example embodiments, controller 102 may include multiple components, such as any combination of one or more microprocessors, one or more controllers, one or more DSPs, one or more ASICs, one or more FPGAs, as well as other discrete or integrated logic circuitry. The functions attributed to the controller herein may be embodied as software, firmware, hardware or any combination thereof. The controller 102 may be part of a system controller or a component controller such as an inertial reference unit (IRU) or an attitude and heading reference system (AHRS).

The memory 104 may include computer-readable operating instructions that, when executed by the controller, provides functions to process and identify turbulence. Such functions may include the functions of causing a communication system 110 to transmit turbulence information when a turbulence is identified. The computer readable instructions may be encoded within the memory 104. Memory 104 may comprise computer readable storage media including any volatile, nonvolatile, non-transitory, magnetic, optical, or electrical media, such as, but not limited to, a random access memory (RAM), read-only memory (ROM), non-volatile RAM (NVRAM), electrically-erasable programmable ROM (EEPROM), flash memory, or any other storage medium.

The communication system 110 is configured to transmit and receive communication signals between the vehicle and a remote location. In the avionics embodiment, the remote location may be a ground station, other type of station or other aircraft. In one embodiment, upon the detection of an event such as turbulence, the controller 102 directs the communication system 110 to transmit the turbulence information. In one example embodiment, a ground station gathers turbulence from producer aircraft and transmits gathered and processed data to consumer aircraft. Further the detected turbulence can be used by the generating aircraft. As described above, the resulting turbulence measurement can be used to log the real time turbulence level and to issue turbulence warnings to the cockpit. The warning may be provided through an input/output device 112 with a display such as a multi-functional display. Further, in one embodiment, at least partial operational control of the vehicle through vehicle control 114 is at least in part due to a detected event.

In some embodiments, vertical acceleration noise due to various aircraft disturbances that the aircraft (vehicle) and crew are experiencing are isolated and measured. In one embodiment, raw vertical acceleration data from an IRS is bandpass filtered. For example, regarding turbulence isolation, vertical acceleration IRS output is low-pass filtered with an appropriate cutoff frequency to remove spectral content of higher frequency disturbances such as chop and vibrations from the vertical acceleration noise. This output is also high-pass filtered with an appropriate cutoff frequency to remove the low frequency accelerations that occur due to maneuvers of the aircraft (such as for example pitch or roll maneuvers). This cutoff frequency is particular to the aircraft of application. In an embodiment, the aircraft type or even the particular aircraft may be tested to determine the correct cutoff frequency due to maneuvers of the aircraft. The resulting measurements can be used to log real time turbulence levels and to issue warnings to the cockpit.

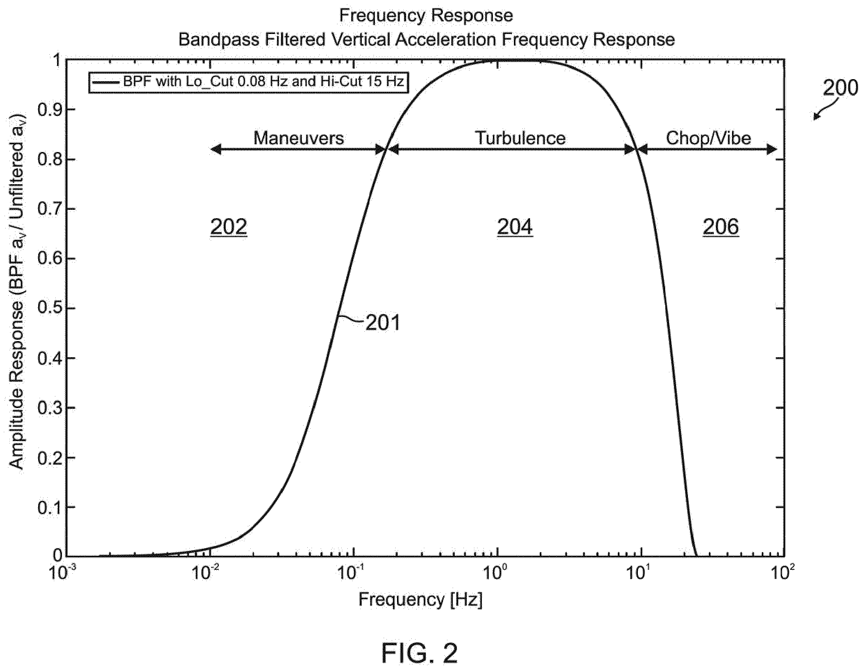

Referring to Figure 2, a frequency response graph 200 of an example embodiment is illustrated. In particular, the frequency response graph 200 illustrates an amplitude response for a given frequency using a bandpass filter (BPF) with a low frequency cutoff (low-cut frequency) value of 0.008 Hz and a high frequency cutoff (high-cut frequency) value of 15Hz. As illustrated in the frequency response graph 200, maneuvers will be detected in the maneuver area 202 on the left side of the frequency response curve 201. Turbulence is detected in a turbulence area 204 that is within frequency response curve 201. Chop/vibe is detected in a chop/vide area 206 on the right of the frequency response curve 201. The frequency response curve 201 may be selected (i.e. the filtering is selected) based on the characteristics of the aircraft as described above. In particular, in one embodiment, the vehicle is tested to measure the amplitude response/frequency caused by maneuvers and chop/vibe in setting the frequency response curve 201.

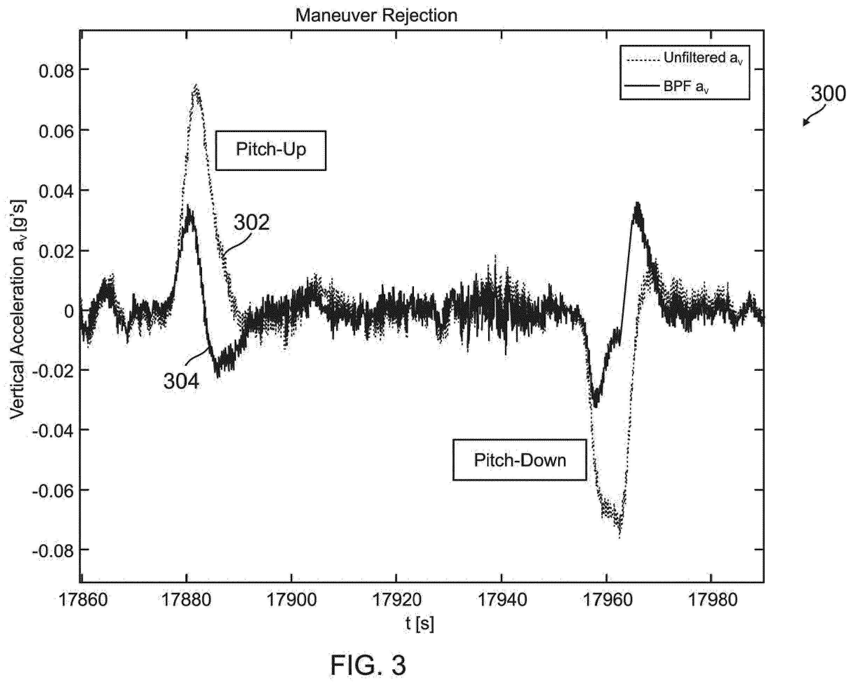

Figure 3 is a maneuver rejection graph 300 illustrating the rejection or attenuation of maneuver events. The maneuver rejection graph 300 example illustrates vertical acceleration vs time showing how acceleration due to aircraft maneuvers can be attenuated. In particular, graph 300 illustrates an unfiltered acceleration 302 and a filtered acceleration 304 during a pitch up and a pitch down maneuver. Figure 3 illustrates the bandpass filter removes most of the maneuver acceleration because it is not very sensitive to the maneuver frequency band. In one example embodiment, a portion of the maneuver acceleration is left in the bandpass filter in order to remain sensitive to the lower frequency components of acceleration that may be present in some larger turbulence events.

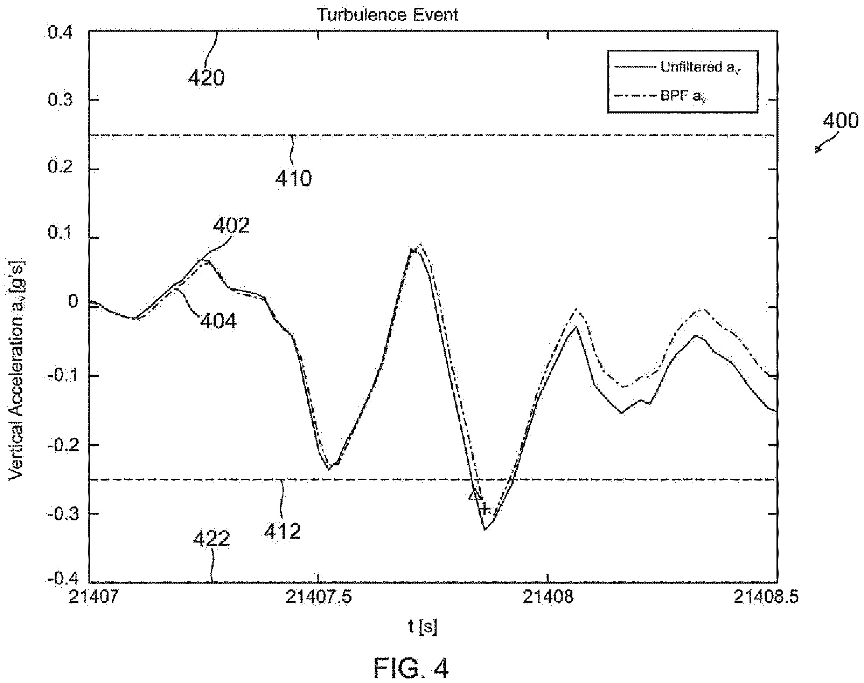

Figure 4 is a turbulence event graph 400 illustrating the detection of a turbulence event. The turbulence event graph 400 illustrates vertical acceleration vs time showing how turbulence experienced by the aircraft can be detected. In particular, graph 400 illustrates an unfiltered acceleration 402 and a filtered acceleration 404 during turbulence. As illustrated in this example, the bandpass filter does not remove any significant amount of acceleration from the turbulence event because the cutoff frequencies are selected to be sensitive to the frequency band in which turbulence resides. In Figure 4, thresholds 410 and 412 are examples of acceleration magnitudes that would trigger a moderate turbulence event. In this example, the moderate thresholds are set at 0.25 g's. Thresholds 420 and 422 are examples of acceleration magnitudes that would trigger a severe turbulence event. In this example the severe turbulence thresholds are set to 0.4 g's. These are just examples of thresholds. There can be any number of thresholds set at any desired acceleration value based on a desired threshold for triggering a logging and reporting of a detected event. Further in some embodiments, a specific threshold value (or threshold values) are used to trigger the transmission of the detected event to a remote location. Further in an embodiment, a continuous transmission to a remote location of the turbulence or acceleration is used.

In further embodiments, select bandpass filters can be used for other types of disturbance types such as, but limited to, high frequency vibration. Similar to the thresholds described in Figure 4, threshold may be set for logging events related to the high frequency vibrations. The select band pass filter used for other types of disturbance types may be used with the bandpass filters designed to detect turbulence events or maybe used as a standalone system.

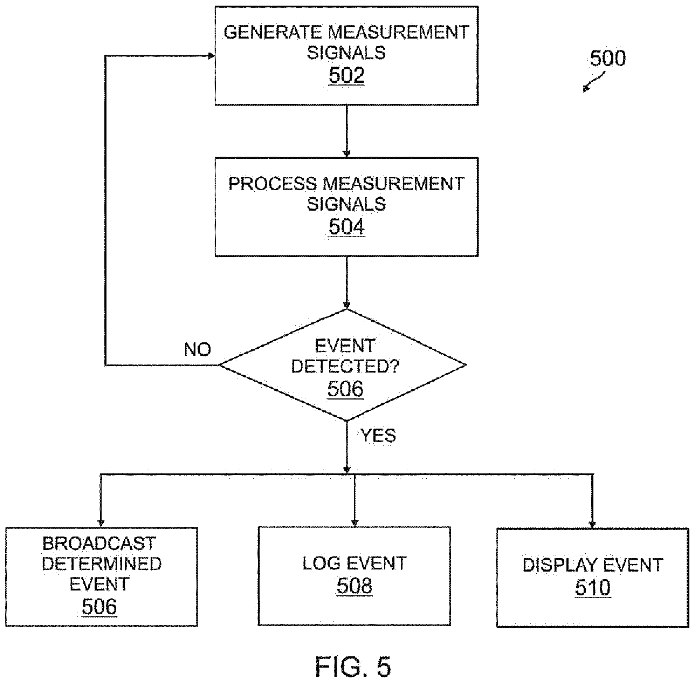

Referring to Figure 5, an event detection flow diagram 500 of one embodiment is illustrated. The event detection flow diagram 500 is provided in a series of sequential steps. In other embodiments however, the sequence may be different. Hence, embodiments are not limited to the sequence set out in Figure 5.

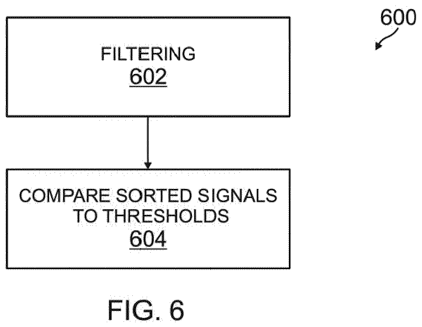

The event detection flow diagram 500 starts with the generation of measurements at step (502). This is done with one or more measurement sensors 107 from measurement system 108. Examples of a measurement systems 108 include an accelerometer and an inertial measurement unit (IMU). An example of a measurement signal is an acceleration signal such as a vertical acceleration signal. The measurement signals are processed at step (504). An example of steps taken in step (504) are described below in relation to Figure 6. From the processed signals, it is determined if an event has been detected at step (506). If no event is detected at step (506), the process continues at step (502) with the generation of measurement signals.

If it is determined at step (506) an event has taken place, in this example embodiment, the event is broadcast or transmitted at step (506), the event is logged in memory 104 at step (508) and/or the event is displayed at step (510). In a turbulence event example, the event is broadcast or transmitted to a remote location such as, but not limited to, a ground station or other aircraft where the turbulence information is gathered from sources such as gathering aircraft and other weather sensing systems and is then broadcast to consuming aircraft. As discussed above, the event may also be logged or stored in memory 104. The logged event can be downloaded or transmitted to a remote location at a later time. For example it may be downloaded once the aircraft has landed or it may be transmitted at a scheduled communication time. Moreover, the time or frequency of transmitting event information may be based on the severity of an event detected. The event may further be displayed so the operator of the vehicle is aware of the detected event and can make any necessary adjustment needed to address the event.

An example of a processing flow diagram 600 is illustrated in Figure 6. The processing flow diagram 500 is provide in a series sequential steps. In other embodiments however, the sequence may be different. Hence, embodiments are not limited to the sequence set out in Figure 6.

The processing flow diagram starts by filtering measurement signals at step (602). In an embodiment this is done with at least one bandpass filter that is selected to sort out disturbance causes by frequency in the measurement signals. Examples of the sorted causes by frequency include maneuvers, turbulence, chop and vehicle vibration. The sorted signals are then compared to select thresholds at step (604) with the controller 102 to determine if an event has occurred. As discussed above, the thresholds may be set for different levels of severity. Further, based on the severity, how an event is dealt with may be determined in one embodiment. For example, a turbulence event that only reaches a low intensity threshold may be stored in memory and transmitted only when another transmission is to be sent or after a select amount of time has passed, wherein a detected turbulence event with a severe intensity may be transmitted right away after detection.

### EXAMPLE EMBODIMENTS

Example 1 is a vehicle disturbance and isolation detection system. The system includes at least one measurement sensor that is configured to generate measurement signals, at least one filter that is used to sort disturbance causes in the measured signals by frequencies, at least one controller that is used to compare the sorted signal to at least one threshold to determine if an event has occurred, a memory to store at least operating instructions for the at least one controller, a controller that is in communication with the memory and a communication system that is in communication with the at least one controller. The communication system is configured to transmit determined events to a remote location.
Example 2, includes the system of Example 1, wherein the at least one measurement sensor measures accelerations of a vehicle including the vehicle disturbance and isolation detection system.
Example 3 includes the system of any of the Examples 1-2, wherein the at least one filter is configured to sort the measurement signals by frequency into at least one of vehicle maneuvers, turbulence, chop and vehicle vibration.
Example 4 includes the system of any of the Examples 1-3, wherein the at least one controller is at least part of at least one of inertial reference unit and an attitude and heading reference system.
Example 5 includes the system of any of the Examples 1-4, wherein the at least one filter is at least one bandpass filter.
Example 6 includes the system of Example 5, wherein the at least one filter is a Butterworth bandpass filter.
Example 7 includes the system of any of the Examples 1-6, further including an input/output in communication with the controller. The controller configured to generate a warning to the input/output based on a determined event.
Example 8 includes the system of any of the Examples 1-7, further including a vehicle control configured to control at least in part operations of the vehicle based at least in part on a determined event.
Example 9 is a method of operating a vehicle disturbance measurement and isolation system, the method includes generating measurement signals with one or more measurement sensors; bandpass filtering the measurement signals to sort out sources of disturbances by frequencies; comparing sorted signals with at least one threshold to determine if at least one event has occurred relating to an associated source of the disturbance; and communicating the at least one event to a remote location.
Example 10 includes the method of Example 9, wherein the sources of disturbances include at least one of vehicle maneuvers, turbulence and chop/vibrations.
Example 11 includes the method of any of the Examples 9-10, further including storing determined events in at least one memory.
Example 12 includes the method of any of the Examples 9-11, further including generating a warning upon determination of an event.
Example 13 includes the method of any of the Examples 9-12, wherein the timing of communicating the at least one event to a remote location is based at least in part on the severity of the at least one event as determined by the at least one threshold.
Example 14 includes the method of any of the Examples 9-13, further including setting the at least one threshold at a select quantity that indicates an event has occurred.
Example 15 includes a method operating a vehicle disturbance measurement and isolation system. The method includes generating vehicle acceleration signals with at least one acceleration sensor; filtering the acceleration signals with at least one bandpass filter to sort out signal sources based on turbulence frequencies; comparing the sorted out signals associated with the turbulence frequencies with at least one threshold; determining a turbulence event has occurred when the sorted out signals associated with the turbulence frequencies reaches the at least one threshold; and upon determining a turbulence event has occurred doing at least one of communicating the turbulence event to a remote location and storing the turbulence event in a memory.
Example 16 includes the method of Example 15, wherein the at least one threshold is a plurality of thresholds. The method further including setting each of the plurality of thresholds based on different levels of severity of the turbulence.
Example 17 includes the method of any of the Examples 15-16, further including basing an action taken by the vehicle on a level of severity of the turbulence as determined by threshold comparisons.
Example 18 includes the method of any of the Examples 15-17, further including providing a warning to an operator of the vehicle upon determining a turbulence event.
Example 19 includes the method of any of the Examples 15-18, further including selecting the at least one bandpass filter to sort out vehicle maneuvers frequencies, turbulence frequencies and chop/vibration frequencies associated with the vehicle.
Example 20 includes the method of any of the Examples 15-19, wherein communicating the turbulence event to a remote location further comprises one of communication of the turbulence event to the remote location as soon as determined and communication of the turbulence event after a select period of time.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A vehicle disturbance and isolation detection system, the system comprising:
at least one measurement sensor configured to generate measurement signals;
at least one filter to sort disturbance causes in the measured signals by frequencies;
at least one controller to compare the sorted signal to at least one threshold to determine if an event has occurred;
a memory to store at least operating instructions for the at least one controller, the controller in communication with the memory; and
a communication system in communication with the at least one controller, the communication system configured to transmit determined events to a remote location.

2. The system of claim 1, wherein the at least one measurement sensor measures accelerations of a vehicle including the vehicle disturbance isolation and detection system.

3. The system of claim 1, wherein the at least one filter is configured to sort the measurement signals by frequency into at least one of vehicle maneuvers, turbulence, chop and vehicle vibration.

4. The system of claim 1, wherein the at least one controller is at least part of at least one of inertial reference unit and an attitude and heading reference system.

5. The system of claim 1, wherein the at least one filter is at least one bandpass filter.

6. The system of claim 1, wherein the at least one filter is a Butterworth bandpass filter.

7. The system of claim 1, further comprising:
an input/output in communication with the controller, the controller configured to generate a warning to the input/output based on a determined event.

8. The system of claim 1, further comprising:
a vehicle control configured to control at least in part operations of the vehicle based at least in part on a determined event.

9. A method of operating a vehicle disturbance measurement and isolation system, the method comprising:
generating measurement signals with one or more measurement sensors;
bandpass filtering the measurement signals to sort out sources of disturbances by frequencies;
comparing sorted signals with at least one threshold to determine if at least one event has occurred relating to an associated source of the disturbance; and
communicating the at least one event to a remote location.

10. The method of claim 9, wherein the sources of disturbances include at least one of vehicle maneuvers, turbulence and chop/vibrations.

11. The method of claim 9, further comprising:
storing determined events in at least one memory.

12. The method of claim 9, further comprising:
generating a warning upon determination of an event.

13. The method of claim 9, wherein the timing of communicating the at least one event to a remote location is based at least in part on the severity of the at least one event as determined by the at least one threshold.

14. The method of claim 9, further comprising:
setting the at least one threshold at a select quantity that indicates an event has occurred.

15. A method operating a vehicle disturbance measurement and isolation system, the method comprising:
generating vehicle acceleration signals with at least one acceleration sensor;
filtering the acceleration signals with at least one bandpass filter to sort out signal sources based on turbulence frequencies;
comparing the sorted out signals associated with the turbulence frequencies with at least one threshold;
determining a turbulence event has occurred when the sorted out signals associated with the turbulence frequencies reaches the at least one threshold; and
upon determining a turbulence event has occurred doing at least one of communicating the turbulence event to a remote location and storing the turbulence event in a memory.

16. The method of claim 15, wherein the at least one threshold is a plurality of thresholds, the method further comprising:
setting each of the plurality of thresholds based on different levels of severity of the turbulence.

17. The method of claim 16, further comprising:
basing an action taken by the vehicle on a level of severity of the turbulence as determined by threshold comparisons.

18. The method of claim 15, further comprising:
providing a warning to an operator of the vehicle upon determining a turbulence event.

19. The method of claim 15, further comprising:
selecting the at least one bandpass filter to sort out vehicle maneuvers frequencies, turbulence frequencies and chop/vibration frequencies associated with the vehicle.

20. The method of claim 15, wherein communicating the turbulence event to a remote location further comprises one of communication the turbulence event to the remote location as soon as determined and communication the turbulence event after a select period of time.
